Europäisches Patentamt

European Patent Office

Office européen des brevets

(19)

(11) Veröffentlichungsnummer: **0 262 586 B1**

## EUROPÄISCHE PATENTSCHRIFT

(45) Veröffentlichungstag der Patentschrift: 23.10.91

(51) Int. Cl.⁵: **B60Q** 1/04, F21M 7/00

(21) Anmeldenummer: 87113951.5

(22) Anmeldetag: 24.09.87

(54) **Kraftfahrzeugscheinwerfer mit Kunststoffglas, ausgerüstet mit einer dem Glas fest verbundenen Aussenkappe.**

(30) Priorität: 26.09.86 FR 8613431

(43) Veröffentlichungstag der Anmeldung:
06.04.88 Patentblatt 88/14

(45) Bekanntmachung des Hinweises auf die
Patenterteilung:
23.10.91 Patentblatt 91/43

(84) Benannte Vertragsstaaten:
DE ES FR GB IT

(56) Entgegenhaltungen:
FR-A- 2 544 839
FR-A- 2 577 012
GB-A- 2 162 627
US-A- 2 281 643

(73) Patentinhaber: **VALEO VISION**
**17, rue Henri Gautier**
**F-93012 Bobigny Cédex(FR)**

(72) Erfinder: **Regnier, Thierry**
**15, Bd. du Centenaire**
**F-89100 Sens(FR)**

(74) Vertreter: **Cohausz & Florack Patentanwälte**
**Postfach 14 01 61 Schumannstrasse 97**
**W-4000 Düsseldorf 1(DE)**

## Beschreibung

Die Erfindung betrifft einen Kraftfahrzeugscheinwerfer mit Kunststoffglas, ausgerüstet mit einer Aussenkappe, wie z.B. aus FR-A-2 544 839 bekannt.

Es ist and bekannt in Scheinwerfereinheiten, die aus mindestens einem beweglich drehbaren Reflektor im Innern eines Gehäuses bestehen, das nach vorne durch ein feststehendes Glas abgeschlossen ist oder die, im Gegensatz dazu, sowohl mit einer starren oder biegsamen Verbindungsmuffe, die den Reflektor mit dem Glas verbindet, als auch umgekehrt mit Gelenkvorrichtungen vom Glas zum Reflektor versehen sind, die zwischen den genannten Teilen bestehenden Lücken durch den Anschluss einer zwischen Glas und Reflektor eingefügten, zusätzlichen Verlängerungshülse abzudecken, um bei ausgeschaltetem Scheinwerfer im wesentlichen dieselbe Sicht und dieselbe Leuchtkraft zu gewährleisten wie bei der Sichtzone der Reflexionsoberfläche, die genannte Zusatzhülse durch über die Transparenz des Glases erzielte optische Täuschung verlängert.

Daher ist es für die erwartete Sicht und Helligkeit wichtig, dass die Reflexionsoberfläche des Reflektors und die Kappenoberfläche der zusätzlichen Verlängerungshülse im wesentlichen gleich sind, sowohl hinsichtlich des Materials, als auch hinsichtlich der optischen Verkleidung und des Schutzes, die sie erhalten, da eine Abweichung bei einem der Faktoren zu einer spürbaren Uneinheitlichkeit in Strahlungs- und Farbintensität von Reflektor und Hülse führt.

Ebenso muss diese Zusatzhülse mit einem Verbindungsmittel versehen sein, das gewünschtenfalls der Montage des Glases auf den Reflektor dient, ohne die Beleuchtungsnutzfläche des einen oder anderen dieser Funktionselemente zu verengen und, wenn das bereitgestellte optische Aggregat in Betrieb ist, darf die für den Betrieb unwesentliche Kappe auch keine unerwünschten Lichtstreuungen erzeugen, die eine ungünstige Wirkung auf die strengen photometrischen Eigenschaften der Lichtbündel haben können.

Ausser bei den optischen Beleuchtungsaggregaten in denen Glas und Reflektor durch eine biegsame äussere Gelenkhülse, wie etwa einen Kautschukbalgen, verbunden sind, und die Kappenhülse verhindert, dass die Schwingungen des Balgen das aktive Beleuchtungsvolumen beeinträchtigen, führen deshalb all diese Zwänge und Anforderungen dazu, dass die zusätzlichen Kosten für eine solche angeschlossene Kappe oft für die vorgesehene praktische Anwendung eines Kraftfahrzeugscheinwerfers nicht realistisch und für den alleinigen Zweck eines ansprechenden Erscheinungsbilds zu hoch sind.

Aus der FR-A-2544839 ist ein Scheinwerfer bekannt, bei dem die innere Trennwand als zusätzlicher Einsatz in den Scheinwerfer eingefügt ist. Neben den Kosten, die mit einem solchen zusätzlichen Bauteil verbunden sind, weist dieser Scheinwerfer einen sprunghaften Übergang von der äußeren Glasfläche auf die innere Trennwand auf, durch die der äußere, optische Eindruck des Scheinwerfers gestört wird.

Ziel der Erfindung ist es, einen Scheinwerfer des vorigen Typs bereitzustellen, bei dem der Einbau einer Kappe nicht zu einer beträchtlichen Erhöhung des Endpreises führt, und bei dem sich von außen ein guter optischer Eindruck ergibt.

Zu diesem Zweck ist der erfindungsgemäße Scheinwerfer dadurch gekennzeichnet, daß die innere Trennwand aus Kunststoffglas einstückig mit der Außenkappe ausgebildet ist.

Durch die erfindungsgemäße Anordnung vermittelt also die Transparentsicht des ausgeschalteten Scheinwerferaggregats durch das Glas die Illusion eines Glases, das direkt auf dem äußeren Rand der Reflektoröffnung durch eine sehr hohe Kante montiert ist, die sich nicht von der gewöhnlichen Sicht traditioneller Scheinwerfer unterscheidet, deren Glas und Reflektor in fester Lage montiert sind.

Die Erfindung betrifft sowohl in einem Schutzgehäuse eingeschlossene optische Beleuchtungsaggregate, als auch direkt an das Fahrzeug montierte Reflektor/ Glas-Einheiten, die gewünschtenfalls mit einem biegsamen oder starren Zwischengelenk versehen sind, das ihrer jeweiligen Ausrichtung dient. Desweiteren vervollständigt sie die Verlängerungskonstruktion im Innern des Glases, wie sie in Figur 8 des französischen Patents Nr. 2 434 994 beschrieben ist und kann sehr gut mit allen in diesem Patent beschriebenen Ausführungsmöglichkeiten kombiniert werden, wie auch mit den im europäischen Patent Nr. 129 922 und dem französischen Patent Nr. 2 541 755 beschriebenen Ausführungen.

Bei der Lektüre der folgenden Beschreibung, die sich auf die angefügte Zeichnung bezieht, wird die Erfindung leicht verständlich, wobei

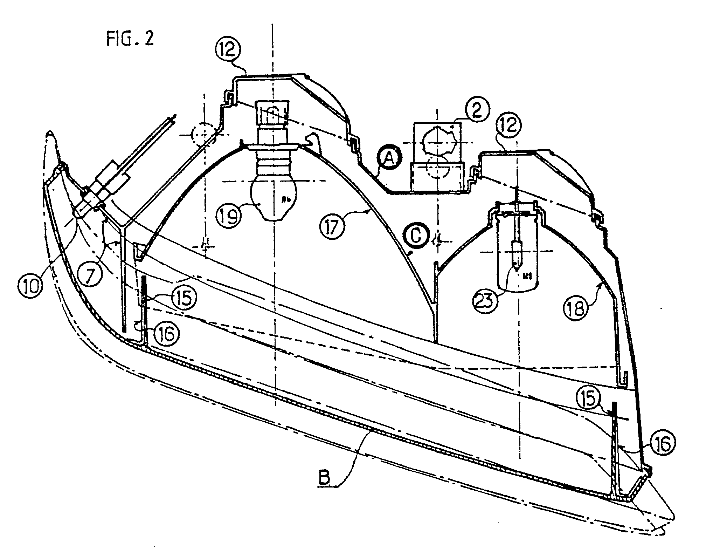

Figur 1 eine Frontaldraufsicht eines Scheinwerfers ist, gemäss einem Ausführungsbeispiel der Erfindung, das drei zusammengehörige Beleuchtungseinheiten beinhaltet;

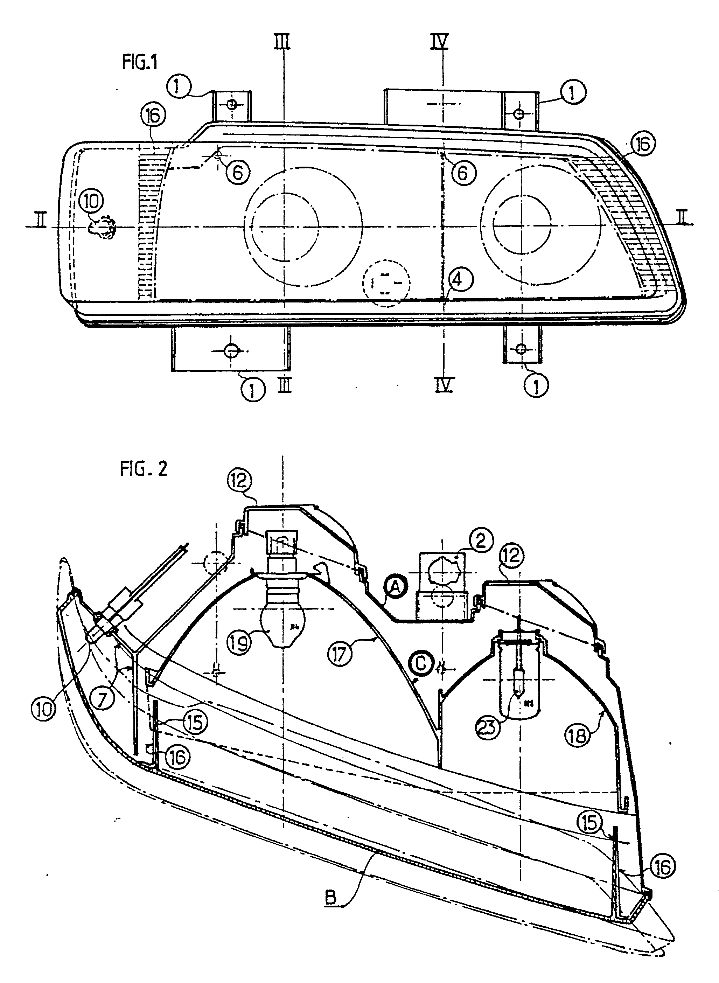

Figur 2 ist ein Schnitt entlang der Linie II-II von Figur 1;

Figur 3 ist ein Schnitt entlang der Linie III-III von Figur 1 und

Figur 4 ist ein Schnitt entlang der Linie IV-IV von Figur 1.

Der in der Zeichnung als Beispiel dargestellte Scheinwerfer hat ein feststehendes Glas und einen beweglichen Reflektor und beinhaltet drei zusammengehörige Beleuchtungs- und Signaleinheiten.

Er umfasst ein nach vorne durch ein Kunststoffglas B verschlossenes Schutzgehäuse A mit einen beweglichen zweiteiligen Reflektor C.

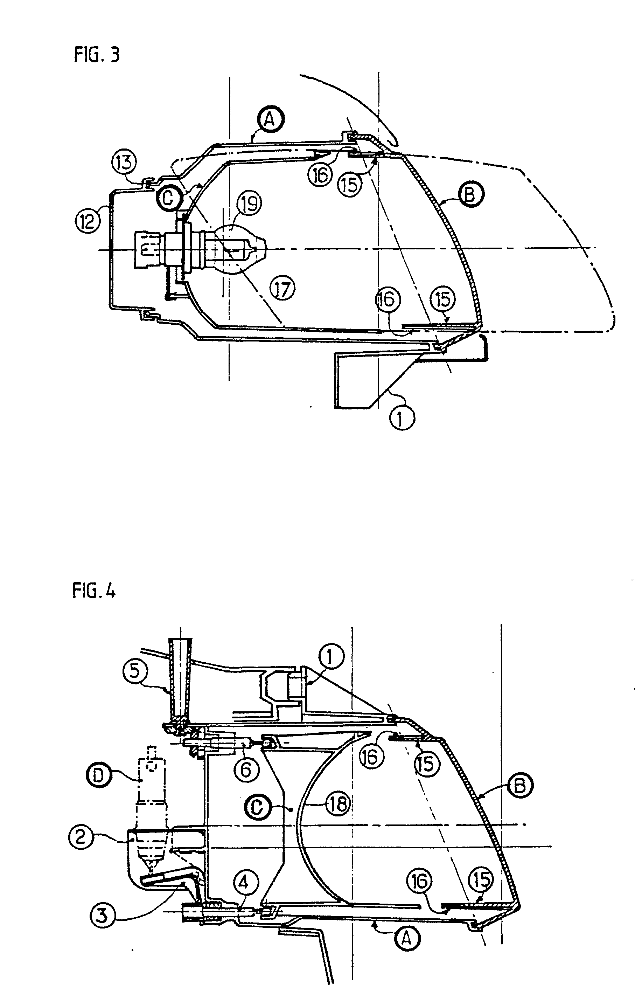

Das schutzgehäuse A aus Kunststoff umfasst zwei Abschnitte und vier an das Fahrzeug angeformte Befestigungsklauen 1. Es umfasst eine Stütze 2 für einen Positionsjustierungsheber D (Figur 4) in Abhängigkeit von der Schwere der Ladung des Fahrzeugs, der auf den Kipper 3 einer feststehenden Stellschraube wirkt. Zwei übergeordnete Vorrichtungen 5 wirken auf zwei Ausgangsstellschrauben 6. Die Innenfläche 7 des kleineren Abschnitts ist mit Metall beschichtet oder mit Silberfarbe bestrichen und übernimmt zusammen mit einer Lampe 10 die Aufgabe eines Positionslichts für das Fahrzeug.

Ausserdem beinhaltet das Gehäuse A zwei bewegliche Abdeckbleche 12 zum Schliessen der Zugangsöffnungen der Lampen mit Abblendlicht-Doppelfunktion 19 und Fernlicht-Einfachfunktion 23.

Der zweiteilige Reflektor C aus Kunststoff beinhaltet ein optisches Beleuchtungsaggregrat 17 mit Abblendlichtfunktion im Zusammenwirken mit der Doppelfunktionslampe 19 und ein optisches Beleuchtungsaggregrat 18 mit Fernlichtfunktion im Zusammenwirken mit der Einfachfunktionslampe 23.

Das die drei zusammengehörigen Beleuchtungseinheiten abdeckende Glas B beinhaltet erfindungsgemäss einen angeformten und mit Rillen 16 für eine optimale Reflexion versehenen Kragen 15. Dieser Kragen stellt eine innere Kappe dar, die aussen an der Öffnung für das Abblend- und Fernlicht des grossen Gehäuseabschnittes befestigt und dazu bestimmt ist, eine vom Äusserlichen her, einheitliche Sicht der abgeschalteten Beleuchtungseinheit zu gewährleisten.

Der Kragen 15 kann getrennt vom Glas B ausgeführt und zum Beispiel durch Verschweissen, Vernieten, Verkleben etc. befestigt werden.

Die im beschriebenen Beispiel auf der Aussenfläche des Kragens 15 eingebauten Reflexionsprismen 16, können sich auch, in einer Abwandlung, auf der Innenfläche befinden. Auch der Kragen 15, kann in einer anderen Abwandlung aus zwei Trennwänden bestehen, zwischen denen ein Reflexionsmittel wie etwa ein mit Metall beschichtetes Blatt eingefügt ist.

## Patentansprüche

1. Kraftfahrzeugscheinwerfer, der mit einer Außenkappe (B) aus Kunststoffglas ausgerüstet ist, wobei das Glas der Außenkappe (B) innen mit einer inneren Trennwand (15) versehen ist, deren äußerer Rand die Beleuchtungsnutzfläche begrenzt, und deren Höhe sich im wesentlichen bis zu einem Abstand von der Öffnungsfläche des Reflektors (C) erstreckt und der ein Mittel (16) zur im wesentlichen optischen und materiellen Abdeckung des gesamten Verbindungsraumes Außenkappe (B) - Reflektor (C) beinhaltet,
**dadurch gekennzeichnet,** daß die innere Trennwand (15) aus Kunststoffglas einstückig mit der Außenkappe (B) ausgebildet ist.

2. Scheinwerfer gemäß Anspruch 1,
**dadurch gekennzeichnet,** daß das sogenannte Abdeckungsmittel (16) aus dem auf die Aussen-und/oder Innenfläche genannter innerer Trennwand (15) angeformten Reflexionsprismen besteht.

3. Scheinwerfer gemäß Anspruch 1 oder 2,
**dadurch gekennzeichnet,** daß genanntes Abdeckungsmittel (16) aus einem zwischen zwei genannte Innenwand (15) bildende Trennwände eingefügten Reflexionsmittel besteht.

## Claims

1. A motor vehicle headlight incorporating an exterior cover (B) made of synthetic glass, wherein the glass of the exterior cover (B) is provided on the inside with an inner separating wall (15), the outer edge of which delimits the useful lighting surface and the height of which essentially extends to a distance from the mouth of the reflector (C), and which comprises a means (16) for covering substantially optically and materially the total connecting space between the exterior cover (B) and the reflector (C), characterized in that the inner separating wall (15) is formed of synthetic glass integrally with the exterior cover (B).

2. A headlight as claimed in claim 1, characterized in that said covering means (16) comprises reflecting prisms formed on the outer and/or inner surface of the inner separating wall (15).

3. A headlight as claimed in claim 1 or claim 2, characterized in that said covering means (16) comprises a reflecting means disposed between two said walls forming an inner partition (15).

## Revendications

1. Projecteur d'éclairage pour véhicule automobile muni d'une glace frontale (B) à vitre en matière plastique dans lequel la vitre de la glace (B) est pourvue intérieurement d'une cloison intérieure (15) dont le contour extérieur délimite la surface utile d'éclairage et dont la hauteur s'étend sensiblement à son espacement de la surface d'ouverture du réflecteur (C), et qui comporte un moyen (16) pour le masquage optique et matériel de la totalité, sensiblement, de l'espace de liaison glace (B)-réflecteur (C), caractérisé en ce que la cloison intérieure (15) est réalisée en vitre en matière plastique, monobloc avec la glace frontale (B).

2. Projecteur selon la revendication 1, caractérisé en ce que ledit moyen de masquage (16) est constitué par des prismes à réflexion totale venus de moulage sur la face externe et/ou la face interne de ladite cloison intérieure (15).

3. Projecteur selon l'une des revendications 1 ou 2, caractérisé en ce que ledit moyen de masquage (16) est constitué par un moyen réfléchissant inséré entre deux cloisons formant ladite paroi intérieure (15).

FIG. 2

FIG.1

FIG. 2

FIG. 3

FIG. 4